# EUROPEAN PATENT APPLICATION

(11) **EP 3 757 933 A1**
(43) Date of publication of application: **30.12.2020**
(21) Application number: 19758240.6
(22) Date of filing: 09.01.2019
(51) Int. Cl.: G06Q 30/08, G06Q 10/06

(54) **SYSTEM FOR PROJECT BIDDING AND COMPANY SELECTION BASED ON INTELLECTUAL PROPERTY RIGHTS**

(30) Priority: 21.02.2018 KR 20180020363
(71) Applicant: Second Connect Co.,Ltd., Gumi-si Gyeongsangbuk-do 39337 (KR)
(72) Inventor: LEE, Seong Won, Gumi-si Gyeongsangbuk-do 39337 (KR)
(74) Representative: Cabinet Chaillot
(86) International application number: PCT/KR2019/000355
(87) International publication number: WO 2019/164124

(57) **Abstract**

The present invention relates to a system for project bidding and company selection based on intellectual property rights, wherein it is possible to expect activation of patent rights that are in danger of expiring while protecting the rights of intellectual property right holders, and the transparency of bidding processes and successful bidders can be improved. The system comprises: a system manager server (100) configured to transmit/receive information through an Internet network (200) on the basis of a microcomputer; multiple unspecified ordering-party smartphones or servers (300) connected to the system manager server (100) through the Internet network; and an intellectual property right holder's smartphone or server (400) connected to the system manager server (100) through the Internet network. The system manager server (100) comprises: at least one intellectual property right database (110) in which various kinds of intellectual property rights are registered, and the registered intellectual property rights are stored according to code numbers assigned in respective fields; an ordering-party database (120) configured to store information regarding a ordering party who has made selection when an intellectual property right associated with project content is selected; a right holder information database (130) configured to store information regarding right holders of the registered intellectual property rights; and a message transmission terminal (140) configured to transmit a message, when an ordering party selects an intellectual property right stored in the intellectual property database (110), so as to inform the right holder of the intellectual property right stored in the right holder information database (130) of successful bidding.

## Description

### TECHNICAL FIELD

The present invention relates to a project bidding and contractor selection system based on intellectual property rights, and more specifically, to a project bidding and contractor selection system based on intellectual property rights, which can reinvigorate patent rights that are in danger of being buried, while protecting rights of intellectual property right holders, and enhance transparency of bidding and successful bidders.

### BACKGROUND ART

Generally, bidding refers to a series of processes in which a procuring entity to be provided with a project, a service, goods or the like receives an amount offered for the project, service, goods or the like within a predetermined time from a plurality of suppliers who desire to supply the project, service, goods or the like, and selects a supplier of a corresponding project, service, goods or the like.

Although electronic bidding through information devices and communication networks is generally practiced recently with the advancement in information and communication technology, bidders themselves still visit a bidding place and submit bid documents.

After submitting the bid documents, the bidders should continuously conduct sales activities, such as doing public relations and meeting persons of the procuring entity who are in charge, to increase the probability of being selected as a contractor, and when the bidders hold patent rights related to the contents of the project, it is general to submit patent right documents as attached documents of the bid documents.

However, a company actually selected as a contractor does not hold a patent right in many cases, and although this can be interpreted as having in an academic relation, a regional relation, or a blood relation, or having a good sales ability, transparency with regard to selection of a contractor cannot be guaranteed.

Although the contractor selection process may be understood to some extents, a problem occurs from the moment of starting the project, and when a contractor selected without a patent right applies technical contents related to patent contents of a company holding the patent right to a project site as they are, lawsuits of civil and criminal cases may occur, and delays and losses caused by the lawsuits are ultimately transferred to the procuring entity and consumers.

The problem does not stay there, and there is a problem in that patents that should be commercially and economically used are buried in many cases.

### DISCLOSURE OF INVENTION

### TECHNICAL PROBLEM

Therefore, the present invention has been made in view of the above problems, and it is an object of the present invention to provide a project bidding and contractor selection system based on intellectual property rights, which can protect rights of intellectual property right holders, minimize exhaustive operating losses, and enhance transparency of bidding and a contractor selected for a project.

Another object of the present invention is to prevent civil and criminal disputes that may occur in the process of a project, and reinvigorate patent rights that are buried due to lack of sales ability despite the technical ability by selecting a company possessing an intellectual property right as a finally selected contractor.

### TECHNICAL SOLUTION

To accomplish the above objects, according to one aspect of the present invention, there is provided a project bidding and contractor selection system based on intellectual property rights.

The project bidding and contractor selection system comprises: a system manager server 100 including: one or more intellectual property right databases 110 for registering various intellectual property rights, and storing the registered intellectual property rights according to a code number assigned for each field, a procuring entity database 120 for storing, when an intellectual property right related to contents of a project is selected, information on the procuring entity who has selected the intellectual property right, a right holder information database 130 for storing information on right holders of the registered intellectual property rights, and a message transmission terminal 140 for transmitting, when the procuring entity selects an intellectual property right stored in the intellectual property right database 110, a message informing the right holder of the intellectual property right stored in the right holder information database 130 of successful bidding, wherein information is transmitted and received through an Internet network 200 on the basis of a microcomputer; multiple unspecified procuring entity smartphones or servers 300 connected to the system manager server 100 through the Internet network; and an intellectual property right holder smartphone or server 400 connected to the system manager server 100 through the Internet network.

At this point, when the intellectual property rights are registered in the system manager server, contents of the intellectual property rights are registered after experts in related industries review technical skills, post-project maintenance, efficiency and quality.

In addition, the intellectual property rights registered in the system manager server 100 are updated with newly registered intellectual property rights on a weekly, monthly, or quarterly basis.

### ADVANTAGEOUS EFFECTS

The project bidding and contractor selection system based on intellectual property rights of the present invention configured of the characteristics as described above may protect patent right holders' rights and minimize exhaustive operating losses owing to transparent bidding and contractor selection, and prevent intellectual property disputes that may occur in the process of a project as a contractor is selected on the basis of the intellectual property rights.

### BRIEF DESCRIPTION OF THE DRAWINGS

FIG. 1 is a block diagram showing a preferred embodiment of the present invention.
FIG. 2 is a block diagram showing an intellectual property right database of a preferred embodiment of the present invention.

### BEST MODE FOR CARRYING OUT THE INVENTION

To accomplish the above object, a project bidding and contractor selection system (S) based on intellectual property rights of the present invention will be described below in detail on the basis of the attached drawings.

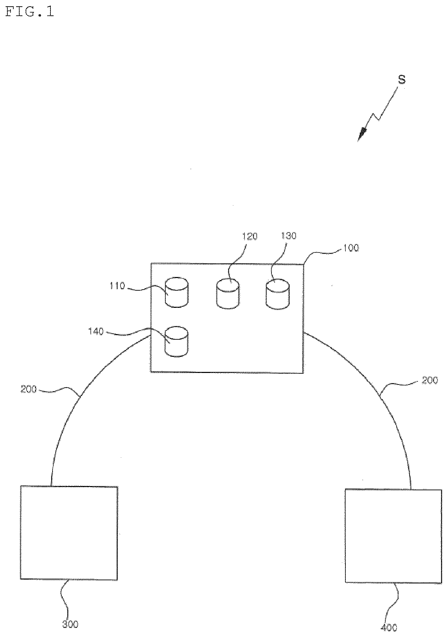

First, the project bidding and contractor selection system provided in the present invention is largely configured of a system manager server 100 of a social network form, a procuring entity smartphone or server 300, and a right holder smartphone or server 400 as shown in FIG. 1.

The system manager server 100 includes one or more intellectual property right databases 110 constructed to register various intellectual property rights and store the registered intellectual property rights according to a code number assigned for each field.

The intellectual property rights refer to industrial property rights such as patents, utility models, designs, trademarks and the like, and copyrights related to literature, music, and art works.

In addition, when intellectual property rights are registered in the system manager server, as contents of the intellectual property rights are registered after experts in related industries review the technical skills, post-project maintenance, efficiency and quality, the procuring entity may trust intellectual property rights, and the examiners may include a plurality of members such as workers having experience in the related industry for five years or more, those having professional certificates, or the like.

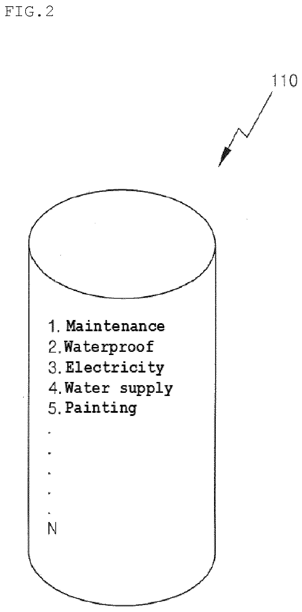

In addition, the code numbers for storing the intellectual property rights in the intellectual property right database 110 may be assigned as a serial number as shown in FIG. 2, or public IPC codes may be used.

In addition to the intellectual property right database 110, the system manager server 100 includes a procuring entity database 120 for storing, when an intellectual property right related to contents of a project is selected, information on the procuring entity who has selected the intellectual property right, a right holder information database 130 for storing information on right holders of the registered intellectual property rights, and a message transmission terminal 140 for transmitting, when the procuring entity selects an intellectual property right stored in the intellectual property right database 110, a message informing the right holder of the intellectual property right stored in the right holder information database 130 of successful bidding.

Since the system manager server 100 is based on a microcomputer, when the procuring entity selects any one of the intellectual property rights, the message transmission terminal 140 transmits a message to the contact information of a corresponding right holder of the intellectual property right at the same time, and both transmission and reception of information are performed through an Internet network 200.

In addition, the intellectual property rights registered in the system manager server 100 may be updated with newly registered intellectual property rights on a weekly, monthly, or quarterly basis, and as a registration date is marked, the procuring entity may confirm whether an intellectual property right is a recent intellectual property right or a past intellectual property right.

A project bidding and contractor selection process will be described below on the basis of the project bidding and contractor selection system S as described above.

First, a procuring entity accesses the system manager server 100 through an internet network using a smartphone or a server (PC) provided in the procuring entity, and then selects an intellectual property right related to the contents of the project.

When the procuring entity selects an intellectual property right, it is guided by the procuring entity database 120 to input information on the procuring entity (address, phone number, etc.), and the inputted information is stored in the procuring entity database 120 at the same time.

When the procuring entity selects an intellectual property right as described above, information on the procuring entity stored in the procuring entity database is transmitted to the smartphone of the intellectual property right holder of the selected intellectual property right as a message through the message transmission terminal 140, and the intellectual property right holder may confirm brief information on the procuring entity, in the form of a block chain that can be confirmed by both parties.

As described above, the intellectual property right holder becomes a contractor selected by the procuring entity, and when the procuring entity provides information such as the project area, period, scope and the like to the intellectual property right holder, the intellectual property right holder offers an amount and specifications of the project and begins the project in full scale.

Of course, when the amount and specifications of the project offered by the intellectual property right holder cannot be accepted, the procuring entity may withdraw selection of the contractor and search for and select another contractor.

In addition, the procuring entity described above may be an apartment resident, a specific individual, a local government office, or a company.

For example, when it is desired to paint the outer wall of an apartment, this becomes a method of selecting a contractor by selecting intellectual property rights related to painting the outer wall, and since bidding companies (intellectual property holders) do not need to conduct any special sales activity, the loss occurred by the sales activity can be minimized, and burial of patent rights acquired with difficulties can be prevented.

In addition, as the procuring entity directly selects a contractor without receiving bids (including electronic bidding) from several companies, there is an advantage in that at least it is free from intellectual property right disputes, as well as reducing duration of the project. Particularly, since intellectual property rights are registered after an expert begins examination, the procuring entity may select a more reliable contractor.

In addition, when an intellectual property right is to be initially registered in the system manager server 100, a predetermined fee is paid, and the paid fee may be used as an examination processing fee of an expert before registration.

Meanwhile, the procuring entity who has selected an intellectual property right is recorded and stored so that anyone may confirm the history of the procuring entity when the intellectual property right is selected, and a separate database may be added to allow the procuring entity to make a review of the project work so that late procuring entities may refer to.

## Claims

1. A project bidding and contractor selection system S based on intellectual property rights, the system comprising:
a system manager server 100 including:
one or more intellectual property right databases 110 for registering various intellectual property rights, and storing the registered intellectual property rights according to a code number assigned for each field,
a procuring entity database 120 for storing, when an intellectual property right related to contents of a project is selected, information on the procuring entity who has selected the intellectual property right,
a right holder information database 130 for storing information on right holders of the registered intellectual property rights, and
a message transmission terminal 140 for transmitting, when the procuring entity selects an intellectual property right stored in the intellectual property right database 110, a message informing the right holder of the intellectual property right stored in the right holder information database 130 of successful bidding, wherein
information is transmitted and received through an Internet network 200 on the basis of a microcomputer;
multiple unspecified procuring entity smartphones or servers 300 connected to the system manager server 100 through the Internet network; and
an intellectual property right holder smartphone or server 400 connected to the system manager server 100 through the Internet network.

2. The system according to claim 1, wherein when the intellectual property rights are registered in the system manager server, contents of the intellectual property rights are registered after experts in related industries review technical skills, post-project maintenance, efficiency and quality.

3. The system according to claim 1, wherein the intellectual property rights registered in the system manager server 100 are updated with newly registered intellectual property rights on a weekly, monthly, or quarterly basis.
